# EUROPÄISCHE PATENTSCHRIFT

(11) **EP 1 012 000 B1**
(45) Veröffentlichungstag und Bekanntmachung des Hinweises auf die Patenterteilung: **02.03.2005**
(21) Anmeldenummer: 98954144.6
(22) Anmeldetag: 05.09.1998
(51) Int. Cl.: B60N 2/50

(54) **UNTERGESTELL FÜR EINEN FAHRZEUGSITZ**
FRAME FOR AN AUTOMOBILE SEAT
SUPPORT D'UN SIEGE DE VEHICULE

(30) Priorität: 13.09.1997 DE 19740377
(43) Veröffentlichungstag der Anmeldung: 28.06.2000
(73) Patentinhaber: GRAMMER AG, 92224 Amberg (DE)
(72) Erfinder: HOLLER, Robert, D-92287 Schmidmühlen (DE)
(74) Vertreter: LOUIS- PÖHLAU- LOHRENTZ
(86) Internationale Anmeldenummer: PCT/DE1998/002648
(87) Internationale Veröffentlichungsnummer: WO 1999/014074

(56) Entgegenhaltungen:
- EP-A- 0 530 439
- EP-A- 0 558 408
- DE-B- 1 089 285
- US-A- 4 589 620

## Beschreibung

Die Erfindung betrifft ein Untergestell für einen Fahrzeugsitz mit einem rechteckigen Grundteil, einem rechteckigen Oberteil und einem zwischen dem Grundteil und dem Oberteil vorgesehenen und daran festgelegten Faltenbalg. Ein Untergestell dieser Art ist in DE 1089285B offenbart.

Bei bekannten Untergestellen dieser Art weist der Faltenbalg tropfenförmige Zapfen auf, die mit einem zentralen Sackloch ausgebildet sind. Das Grundteil und das Oberteil derartiger bekannter Untergestelle sind mit Bohrungen versehen, in welche die vom Faltenbalg wegstehenden Einsteckzapfen eingesteckt werden. Zu diesem Zwecke wird in das jeweilige zentrale Sackloch ein stiftartiges Werkzeug eingesteckt, mit welchem dann der jeweilige Einsteckzapfen in das zugehörige Loch im Grund- bzw. Oberteil eingesteckt wird. Nach dem Einstecken des Einsteckzapfens in das zugehörige Loch wird das stiftförmige Werkzeug aus dem Sackloch wieder herausgezogen. Das stellt einen erheblichen Montageaufwand dar.

Der Erfindung liegt die Aufgabe zugrunde, ein Untergestell der eingangs genannten Art zu schaffen, bei welchem der genannte Montageaufwand eliminiert ist.

Diese Aufgabe wird bei einem Untergestell der eingangs genannten Art erfindungsgemäss dadurch gelöst, dass das Grundteil und/oder das Oberteil mit schlüssellochförmigen Löchern und der Faltenbalg mit zugehörigen schlüsselbartförmigen, pilzartigen Einrastzapfen ausgebildet ist.

Bei dem erfindungsgemässen Untergestell werden die vom Faltenbalg wegstehenden schlüsselbartförmigen, pilzartigen Einrastzapfen einfach in die zugehörigen schlüssellochförmigen Löcher hineinbewegt, um den Faltenbalg mit dem Grund- oder Oberteil zu verbinden. Ein spezielles Werkzeug ist hierbei entbehrlich.

Erfindungsgemäss weisen die schlüssellochförmigen Löcher im Grundteil bzw. im Oberteil des Untergestells voneinander einen Abstand auf, der an den Abstand zwischen den zugehörigen Einrastzapfen derartig angepasst ist, dass die Einrastzapfen beim Einstecken in die zugehörigen Löcher voneinander geringfügig auseinandergedehnt werden müssen. Nach der Anordnung der Einrastzapfen in den zugehörigen Löchern sind die Einrastzapfen dann infolge mechanischer Entspannung in den Löchern eingezwängt. Hierdurch ergibt sich also eine mechanisch zuverlässige Festlegung des Faltenbalges.

Zu diesem Zwecke ist es bevorzugt, wenn die an der jeweiligen Seite des Grundteils und/oder des Deckelteiles des erfindungsgemässen Untergestells vorgesehenen schlüssellochförmigen Löcher derartig orientiert sind, dass mindestens zwei Schlitzabschnitte einander zugewandt sind. Im fertigmontierten Zustand des Faltenbalges sind dann die schlüsselbartförmigen, pilzartigen Einrastzapfen gegen die besagten Schlitzabschnitte der schlüssellochförmigen Löcher gezwängt, wodurch eine zuverlässige Festlegung des Faltenbalgs am Grund- bzw. am Oberteil des erfindungsgemässen Untergestells gewährleistet wird.

Um während der Montage des Faltenbalgs am Grundteil und/oder am Oberteil eine Beschädigung der Einrastzapfen durch von den schlüssellochförmigen Löchern wegstehende Grate zu vermeiden, ist es bevorzugt, wenn die Schlitzabschnitte der schlüssellochförmigen Löcher mit einer Fase versehen sind. Durch diese Fase werden die besagten fertigungsbedingten Grate beseitigt, so dass sowohl bei der erwähnten Montage als auch während der Einsatzdauer des erfindungsgemässen Untergestells gratbedingte Beschädigungen der schlüsselbartförmigen, pilzartigen Einrastzapfen vermieden werden.

Jeder Einrastzapfen weist vorzugsweise einen Mittelabschnitt und einen Kappenabschnitt mit einem länglichen Querschnittsprofil auf. Das Querschnittsprofil des Mittelabschnittes ist zweckmässigerweise an das lichte Querschnittsprofil des Schlitzabschnittes des zugehörigen schlüssellochförmigen Loches im Grund- bzw. Oberteil des erfindungsgemässen Untergestells angepasst.

Der Mittelabschnitt und der Kappenabschnitt des jeweiligen schlüsselbartförmigen, pilzartigen Einrastzapfens sind vorzugsweise gleich lang, so dass der Kappenabschnitt nur beidseitig seitlich über den Mittelabschnitt übersteht.

Eine gratbedingte Beschädigung des jeweiligen schlüsselförmigen, pilzartigen Einrastzapfens des Faltenbalgs ist erfindungsgemäss auch dadurch vermeidbar, dass der Mittelabschnitt zum Faltenbalg hin an seinen beiden voneinander abgewandten Stirnseiten erweitert und dass die am Schlitzende des zugehörigen schlüssellochförmigen Loches im Grund- oder Deckelteil anliegende Stirnseite auf der vom Kappenabschnitt abgewandten Innenseite mit einer Aussparung ausgebildet ist. Derartige Hinterschneidungen bildende Aussparungen bzw. derartige Hinterschneidungen bildende schlüsselbartförmige, pilzartige Einrastzapfen mit einem Mittelabschnitt und einem beidseitig über den Mittelabschnitt überstehenden Kappenabschnitt sind einfach und problemlos realisierbar, weil der Faltenbalg üblicherweise aus einem elastisch nachgiebigen Kunststoffmaterial besteht. Das bedeutet, dass auf ein Schieber aufweisendes, relativ kompliziert konzipiertes Formwerkzeug zur Herstellung des Faltenbalges verzichtet werden kann.

Das Grundteil und das Oberteil des erfindungsgemässen Untergestells bestehen üblicherweise aus einem geeigneten Metallblech.

Weitere Einzelheiten, Merkmale und Vorteile ergeben sich aus der nachfolgenden Beschreibung wesentlicher Teile des erfindungsgemässen Untergestells, nämlich eines Faltenbalges und eines Grundteiles des Untergestells für einen Fahrzeugsitz. Es zeigen:
- Fig. 1: eine Draufsicht auf den Faltenbalg in einem verkleinerten Massstab,
- Fig. 2: einen Schnitt entlang der Schnittlinie II-II in Fig.1 durch den Faltenbalg,
- Fig. 3: einen Schnitt durch ein Grundteil aus einem Blechmaterial in einem verkleinerten Massstab
- Fig. 4: stark vergrössert einen Schnitt entlang der Schnittlinie IV-IV in Fig.2 durch den Faltenbalg bzw. durch einen vom Faltenbalg wegstehenden schlüsselbartförmigen, pilzartigen Einrastzapfen,
- Fig. 5: einen Schnitt entlang der Schnittlinie V-V in Fig.2 durch den Faltenbalg bzw. einen schlüsselförmigen, pilzartigen Einrastzapfen senkrecht zur Schnittebene gemäss Fig. 4 in einem stark vergrösserten Massstab,
- Fig. 6: stark vergrössert einen Schnitt entlang der Schnittlinie VI-VI in Fig.2 durch einen anderen schlüsselbartförmigen, pilzartigen Einrastzapfen in einer der Fig. 4 ähnlichen Ansicht, und
- Fig. 7: einen Schnitt entlang der Schnittlinie VII-VII in Fig.2 durch den zuletzt genannten Einrastzapfen, d.h. senkrecht zur Schnittebene gemäss Fig. 6 in einem vergrösserten Massstab.

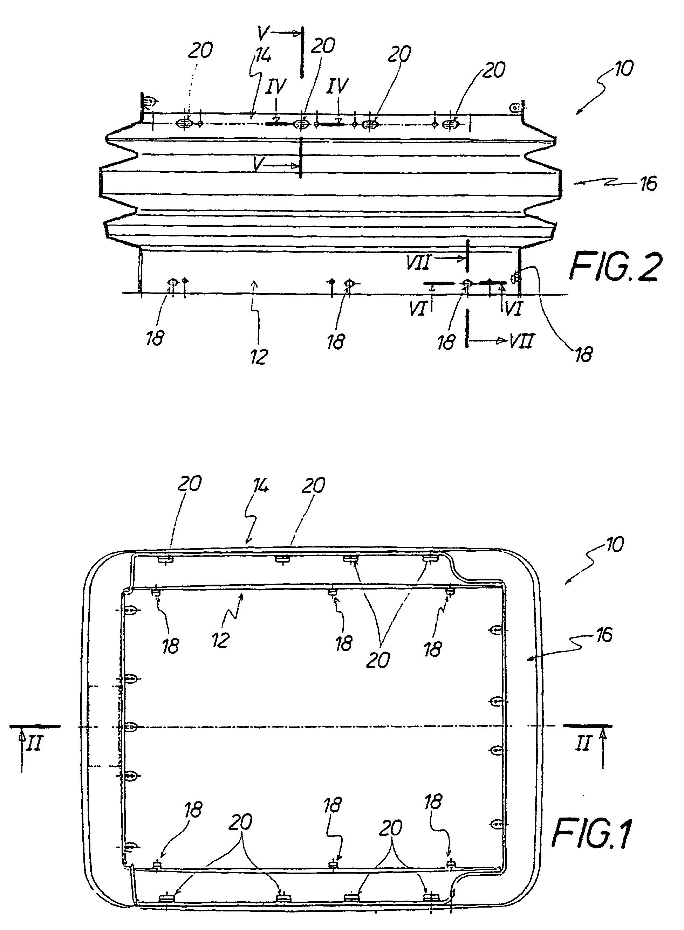

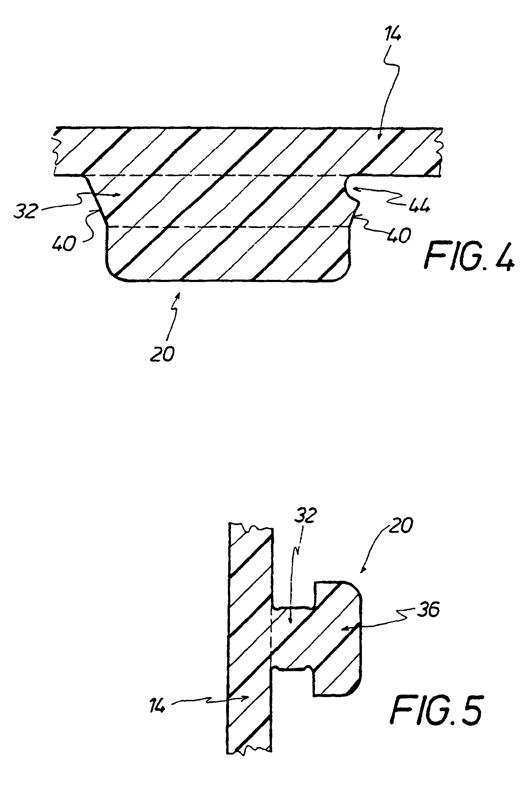

Die Figuren 1 und 2 zeigen einen Faltenbalg 10 mit einem Unterrand 12, mit einem Oberrand 14 und mit einem Faltenabschnitt 16 zwischen dem Unterrand 12 und dem Oberrand 14. Der Unterrand 12 ist einstückig mit schlüsselbartförmigen, pilzartigen Einrastzapfen 18 und der Oberrand 14 ist integral mit schlüsselbartförmigen, pilzartigen Einrastzapfen 20 ausgebildet, die weiter unten in Verbindung mit den Figuren 4 und 5 bzw. 6 und 7 beschrieben werden.

Die Einrastzapfen 18 und 20 stehen vom Faltenbalg 10 nach innen weg.

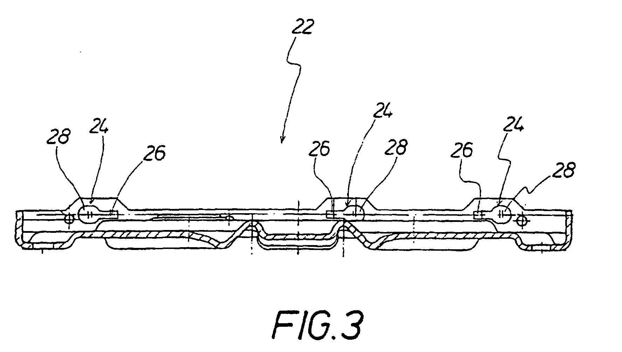

Fig. 3 zeigt in einer Schnittdarstellung ein Grundteil 22 aus einem Blechmaterial, das mit schlüssellochförmigen Löchern 24 ausgebildet ist. In Fig. 3 sind drei solche schlüssellochförmige Löcher 24 zu erkennen, von welchen jedes Loch 24 einen Schlitzabschnitt 26 und einen erweiterten Einsteckabschnitt 28 aufweist.

Die schlüssellochförmigen Löcher 24 sind derartig orientiert vorgesehen, dass mindestens zwei Schlitzabschnitte 26 einander zugewandt sind. Weist das Grundteil 22 also an einer seiner vier Seiten drei schlüssellochförmige Löcher 24 auf - wie in Fig. 3 gezeichnet ist -, so weisen zwei (in Fig. 3 die beiden rechten) Schlitzabschnitte 26 in die gleiche Richtung, und ist der dritte (in Fig. 3 der linke) Schlitzabschnitt 26 den beiden zuerst genannten Schlitzabschnitten 26 zugewandt. Sind vier schlüssellochförmige Löcher 24 auf der entsprechenden Seite des Grundteiles 22 - und/oder des nicht gezeichneten Oberteils des Untergestelles - vorgesehen, so weisen die Schlitzabschnitte 26 paarweise in die gleiche Richtung und die Schlitzabschnitte 26 der beiden Lochpaare sind einander zugewandt vorgesehen.

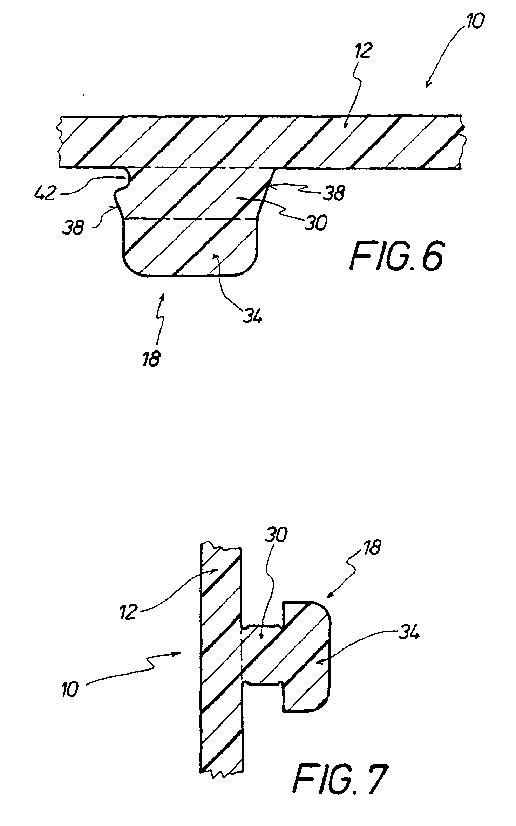

Die Figuren 4, 5 und 6, 7 verdeutlichen abschnittweise den Faltenbalg 10 bzw. dessen Unterrand 12 (sh. die Figuren 6 und 7) bzw. dessen Oberrand 14 (sh. die Figuren 4 und 5). Vom jeweiligen Rand 12 bzw. 14 stehen integral nach innen gerichtet Einrastzapfen 18 bzw. 20 weg, die einen Mittelabschnitt 30 (sh. Fig. 7) bzw. einen Mittelabschnitt 32 (sh. Fig. 5) und einen Kappenabschnitt 34 (sh. Fig. 7) bzw. einen Kappenabschnitt 36 (sh. Fig. 5) aufweist. Wie aus den Figuren 4 und 6 ersichtlich ist, sind der jeweilige Mittelabschnitt 30 oder 32 gleich lang wie der zugehörige Kappenabschnitt 34 bzw. 36, d.h. der jeweilige Kappenabschnitt 34 oder 36 steht nur seitlich über den Mittelabschnitt 30 bzw. 32 über, wie aus den Figuren 5 und 7 ersichtlich ist.

Die Figuren 4 und 6 verdeutlichen ausserdem, dass der jeweilige Mittelabschnitt 30 bzw. 32 zum Faltenbalg 10 bzw. zum entsprechenden Rand 12 bzw. 14 hin an seinen beiden voneinander abgewandten Längs-Stirnseiten 38 (sh. Fig. 6) bzw. 40 (sh. Fig. 4) konisch erweitert ist, und dass die am jeweiligen Schlitzende des zugehörigen schlüssellochförmigen Loches 24 im Grundteil 22 oder im nicht gezeichneten Deckelteil des Untergestells anliegende Stirnseite 38 bzw. 40 auf der vom zugehörigen Kappenabschnitt 34 bzw. 36 abgewandten Innenseite mit einer Aussparung 42 (sh. Fig. 6) bzw. 44 (sh. Fig. 4) ausgebildet ist, die zur nichtstörenden Aufnahme eines möglicherweise vorhandenen Grats am Rand des zugehörigen schlüssellochförmigen Loches 24 dient.

## Patentansprüche

1. Untergestell für einen Fahrzeugsitz mit einem rechteckigen Grundteil (22), einem rechteckigen Oberteil und einem zwischen dem Grundteil (22) und dem Oberteil vorgesehenen und daran festgelegten Faltenbalg (16),
**dadurch gekennzeichnet,**
**dass** das Grundteil (22) und/oder das Oberteil mit schlüssellochförmigen Löchern (24) und dass der Faltenbalg (10) mit zugehörigen schlüsselbartförmigen, pilzartigen Einrastzapfen (18, 20) ausgebildet ist.

2. Untergestell nach Anspruch 1,
**dadurch gekennzeichnet,**
**dass** die an der jeweiligen Seite des Grundteiles (22) und/oder des Oberteiles vorgesehenen schlüssellochförmigen Löcher (24) derartig orientiert sind, dass mindestens zwei ihrer Schlitzabschnitte (26) einander zugewandt sind.

3. Untergestell nach Anspruch 1 oder 2,
**dadurch gekennzeichnet,**
**dass** die Schlitzabschnitte (26) der schlüssellochförmigen Löcher (24) zumindest aussenseitig mit einer Fase versehen sind.

4. Untergestell nach Anspruch 1,
**dadurch gekennzeichnet,**
**dass** jeder schlüsselbartförmige, pilzartige Einrastzapfen (18, 20) einen Mittelabschnitt (30, 32) und einen Kappenabschnitt (34, 36) mit einem länglichen Querschnittsprofil aufweist.

5. Untergestell nach Anspruch 4,
**dadurch gekennzeichnet,**
**dass** der Mittelabschnitt (30, 32) und der Kappenabschnitt (34, 36) gleich lang sind, so dass der Kappenabschnitt (34, 36) nur seitlich über den Mittelabschnitt (30, 32) übersteht.

6. Untergestell nach Anspruch 4,
**dadurch gekennzeichnet,**
**dass** der Mittelabschnitt (30, 32) zum Faltenbalg (10) hin an seinen beiden voneinander abgewandten Längs-Stirnseiten (38, 40) erweitert und dass die am Schlitzende des zugehörigen schlüssellochförmigen Loches (24) im Grundteil (22) oder im Deckelteil anliegende Stirnseite (38, 40) auf der vom Kappenabschnitt (34, 36) abgewandten Innenseite mit einer Aussparung (42, 44) ausgebildet ist.

## Claims

1. Frame for an automobile seat, having a rectangular base part (22), a rectangular upper part and an expansion bellows (16) provided between the base part (22) and the upper part and fixed thereto, **characterized in that** the base part (22) and/or the upper part is designed with keyhole-shaped holes (24), and **in that** the expansion bellows (10) is designed with associated key-bit-shaped, mushroom-like snap-in pins (18, 20).

2. Frame according to Claim 1, **characterized in that** the keyhole-shaped holes (24) which are provided on the particular side of the base part (22) and/or of the upper part are oriented in such a manner that at least two of their slot sections (26) face each other.

3. Frame according to Claim 1 or 2, **characterized in that** the slot sections (26) of the keyhole-shaped holes (24) are provided at least on the outside with a bevel.

4. Frame according to Claim 1, **characterized in that** each key-bit-shaped, mushroom-like snap-in pin (18, 20) has a central section (30, 32) and a cap section (34, 36) with an elongate cross-sectional profile.

5. Frame according to Claim 4, **characterized in that** the central section (30, 32) and the cap section (34, 36) are identical in length, so that the cap section (34, 36) only protrudes laterally over the central section (30, 32).

6. Frame according to Claim 4, **characterized in that** the central section (30, 32) widens towards the expansion bellows (10) at its two mutually remote longitudinal end sides (38, 40), and **in that** the end side (38, 40) which bears against the slot end of the associated, keyhole-shaped hole (24) in the base part (22) or in the cover part is designed with a cutout (42, 44) on the inside, which is remote from the cap section (34, 36).

## Revendications

1. Châssis pour un siège de véhicule avec une partie de base rectangulaire (22), une partie supérieure rectangulaire et un soufflet (16) prévu entre la partie de base (22) et la partie supérieure et fixé à celles-ci,
**caractérisé en ce que** la partie de base (22) et/ou la partie supérieure est conçue avec des trous en forme de trou de serrure (24) et **en ce que** le soufflet (10) est conçu avec des tourillons d'encliquetage (18, 20) correspondants en forme de panneton, du type champignon.

2. Châssis selon la revendication 1, **caractérisé en ce que** les trous en forme de trou de serrure (24) prévus sur le côté respectif de la partie de base (22) et/ou de la partie supérieure sont orientés de telle manière qu'au moins deux de leurs segments fendus (26) sont tournés l'un vers l'autre.

3. Châssis selon la revendication 1 ou 2, **caractérisé en ce que** les segments fendus (26) des trous en forme de trou de serrure (24) sont pourvus d'un chanfrein au moins du côté extérieur.

4. Châssis selon la revendication 1, **caractérisé en ce que** chaque tourillon d'encliquetage (18, 20) en forme de panneton, du type champignon, comporte un segment central (30, 32) et un segment de sommet (34, 36) avec un profil de section transversale allongé.

5. Châssis selon la revendication 4, **caractérisé en ce que** le segment central (30, 32) et le segment de sommet (34, 36) sont de même longueur de sorte que le segment de sommet (34, 36) fait saillie au-dessus du segment central (30, 32) seulement latéralement.

6. Châssis selon la revendication 4, **caractérisé en ce que** le segment central (30, 32) est élargi en direction du soufflet (10) sur ses deux longs côtés frontaux (38, 40) détournés l'un de l'autre et **en ce que** le côté frontal (38, 40) s'appuyant sur l'extrémité de la fente du trou correspondant en forme de trou de serrure (24) dans la partie de base (22) ou dans la partie de couvercle est configurée avec un évidement (42, 44) sur le côté intérieur détourné du segment de sommet (34, 36).
